# EUROPEAN PATENT SPECIFICATION

(11) **EP 4 411 482 B1**
(45) Date of publication and mention of the grant of the patent: **11.02.2026**
(21) Application number: 23190470.7
(22) Date of filing: 09.08.2023
(51) Int. Cl.: G03G 15/00, G06F 3/12, H04N 1/00, G03G 21/14

(54) **INFORMATION PROCESSING APPARATUS, INFORMATION PROCESSING PROGRAM AND INFORMATION PROCESSING METHOD**
INFORMATIONSVERARBEITUNGSVORRICHTUNG, INFORMATIONSVERARBEITUNGSPROGRAMM UND INFORMATIONSVERARBEITUNGSVERFAHREN
APPAREIL DE TRAITEMENT D'INFORMATIONS, PROGRAMME DE TRAITEMENT D'INFORMATIONS ET PROCÉDÉ DE TRAITEMENT D'INFORMATIONS

(30) Priority: 03.02.2023 JP 2023015630
(43) Date of publication of application: 07.08.2024
(73) Proprietor: FUJIFILM Business Innovation Corp., Minato-ku Tokyo (JP)
(72) Inventor: OBARA, Noriyuki, Yokohama-shi, Kanagawa (JP)
(74) Representative: Kurig, Thomas

(56) References cited:
- JP-A- 2000 280 580
- JP-A- 2006 135 702

## Description

### Background

### (i) Technical Field

The present disclosure relates to an information processing apparatus, an information processing program and an information processing method.

### (ii) Related Art

Japanese Unexamined Patent Application Publication No. 2011-103635 discloses an image forming system. The image forming system includes an image input unit that inputs image data, an operation unit that enables a variety of image formation conditions to be set on an image input by the image input unit, an image processing unit that performs an image processing operation on the input image, an image processing parameter setting unit that sets the image processing unit in accordance with the image formation conditions, an image forming unit that performs image forming on an image image-processed by the image processing unit, an image formation condition storage unit that stores an image formation condition set by the operation unit, a Fast Copy Time (FCOT) determination unit that determines whether the image formation condition is a FCOT operation condition, and a startup unit. If the FCOT determination unit determines that the image formation condition is a FCOT operation condition, the startup unit starts up the image processing parameter setting unit before starting a preparation operation to the image forming unit or the image input unit.

Japanese Unexamined Patent Application Publication No. 2017-132594 discloses an image forming apparatus. The image forming apparatus includes multiple medium trays, an image former that performs image forming on a medium, a medium feeding mechanism that feeds and transports the medium from one of the medium trays to the image former, and a controller. The controller controls the medium feeding mechanism, thereby performing a control process to switch from one medium tray to another serving a feeder source of the medium to the image former. If a first medium tray having a predetermined medium size runs out of media while the image former is being fed with medium, the controller performs the control process to switch the medium feeder source to a second medium tray having the predetermined medium size. All the medium trays of the predetermined sheet size run out medium and then multiple medium trays are replenished with media of the predetermined sheet size. In such a case, the controller performs a medium post-replenishment control process to switch the medium feeder source such that each of the medium trays replenished with the media of the predetermined sheet size feeds at least one medium to the image former.

Japanese Unexamined Patent Application Publication No. 10-164333 discloses an image forming apparatus. The image forming apparatus includes a first memory that stores compressed data, a compression unit that segments read document image data into blocks, compresses the document image data by block and stores the document image data onto the first memory, a second memory that stores image output data, a decompression unit that reads data from the first memory by block, decompresses the read data, and stores the decompressed data onto the second memory, a print unit that performs image outputting by reading the image data from the second memory and a setting unit that estimates compression time used for the compression unit to compress uncompressed data and decompression time used for the decompression unit to decompress data and sets start timing when the print unit starts the image outputting before the decompression of all blocks is completed.

One information processing apparatus performs a printing process including a document reading operation with a scanner, an image processing operation that generates an image to be formed on a paper sheet with an image processor, an image forming operation that forms an image on a paper sheet in response to the generated image. The printing process is performed such that the operations included in the printing process are controlled to be performed in a series of sequence. Based on the assumption that each operation included in the printing process ends within a predetermined defined time, each operation is started without waiting for a timing of the end of each control (assumed control). In accordance with the assumed control, fast copy time may be improved without interrupting operation in the middle of each operation in the printing process. The fast copy time in the printing process refers to a time duration from an instruction provided to start printing to discharging a paper sheet.

Depending on the usage rate of a central processing unit (CPU), bus or memory in an information processing system, time longer than a defined time duration may be taken until the image processing operation in the printing process is completed. In other words, the image processing operation may be delayed. If feeding of paper sheets starts in accordance with the defined time with the image processing operation delayed, the generation of an image that is expected to be formed is still not completed when a paper sheet arrives at the image former. This may lead to image formation failure, including discharging a blank paper sheet or a paper sheet with incomplete image.
JP 2006 135702 A discloses an image forming apparatus in which when a user sets the parameter of a job on an operation panel, a controller judges whether or not the set parameter is pertinent to the FCOT mode, and when judging that it is pertinent, transmits FCOT activation signals through control lines to an image input part and an image output part, and also serially transmits parameters through communication lines to the image input part and the image output part. When receiving the FCOT activation signals, the image input part and the image output part immediately start, prior to a read operation and a printing operation, the standby operations therefor.
JP 2000 280580 A discloses an image forming apparatus, in which data of a read document is compressed and stored in a memory, read out from the memory and extended, so that a toner image is formed to an image carrier, transferred to a transfer paper and recorded. A CPU controls to start to read out the document according to a copy start signal, compress and store the data of the read document in a memory, read out and extend the stored data in the memory, form the toner image to the image carrier, drive a first paper feed part to make a transfer paper wait at a second paper feed part beforehand to transfer the image when a transfer timing to the transfer paper which is inversely calculated from a specified number of lines corresponding to a time necessary from the start of reading the document to the extension reaches a timing after a time corresponding to the specified number of lines has passed, and drive the second paper feed part when the transfer timing to the transfer paper reaches the timing after the time corresponding to the specified number of lines has passed.

### Summary

The present invention is defined in the appended claims. The following disclosure serves a better understanding of the present invention. Accordingly, it is an object of the present disclosure to provide an information processing apparatus, an information processing program and an information processing method controlling image formation failure even if an image processing operation to generate an image to be formed on a paper sheet is not finished within a predetermined time duration.

According to a first aspect of the present disclosure, there is provided an information processing apparatus including a processor configured to: if an image processing operation generating an image to be formed on a paper sheet is not completed until a predetermined period of time elapses, switch transporting a paper sheet to an image former from a first tray to transporting a paper sheet to the image former from a second tray that takes a longer time to transport the paper sheet than the first tray.

According to a second aspect of the disclosure, in the information processing apparatus in view of the first aspect, the processor is configured to transport the paper sheet from the first tray if the image processing operation is completed before the predetermined period of time elapses.

According to a third aspect of the disclosure, in the information processing apparatus in view of one of the first and second aspects, the predetermined period of time is a time duration extending from a timing when the image processing operation is completed without being delayed with respect to a specific period of time to a timing before the paper sheet is transported from the first tray.

According to a fourth aspect of the disclosure, in the information processing apparatus in view of one of the first through third aspects, the processor is configured to switch to transporting the paper sheet from the second tray before transporting the paper sheet from the first tray starts after elapse of the predetermined period of time.

According to a fifth aspect of the disclosure, in the information processing apparatus in view of one of the first through fourth aspects, the processor is configured to, if the second tray containing a paper sheet identical in sheet size to a paper sheet contained in the first tray is not present, transport the paper sheet from the first tray.

According to a sixth aspect of the disclosure, in the information processing apparatus in view of the fifth aspect, the processor is configured to start a process of the image former after the image processing operation is completed.

According to a seventh aspect of the disclosure in the information processing apparatus in view of one of the first through sixth aspects, a transport path of the paper sheet from the second tray to the image former is longer than a transport path of the paper sheet from the first tray to the image former.

According to an eighth aspect of the disclosure, there is provided an information processing apparatus including: a processor configured to: perform control in a first mode that causes an image former to start a process without waiting for an image processing operation to be completed if other trays that take a longer time duration to transport a paper sheet than a time duration that is taken by a first tray from which a paper sheet is transportable by a shortest time duration are present among trays that contain paper sheets having a sheet size on which an image is to be formed; and if the other trays are not present, perform control in a second mode that causes the image former to start the process after waiting until the image processing operation is completed.

According to a ninth aspect of the disclosure, in the information processing apparatus in view of the eighth aspect, the processor is configured to perform control in the second mode if the other trays include a second tray that, if the image processing operation is delayed, starts transporting the paper sheet after an elapse of a maximum time duration used to perform the image processing operation and is able to transport the paper sheet to the image former at a timing that is in time for an image forming operation.

According to a tenth aspect of the disclosure, in the information processing apparatus in view of the ninth aspect, a transport path from the first tray to the image former is shortest, and a transport path from the second tray to the image former is longer than the transport path from the first tray.

According to an eleventh aspect of the disclosure, there is provided an information processing program causing a computer to execute a process for processing information, the process including: if an image processing operation generating an image to be formed on a paper sheet is not completed until a predetermined period of time elapses, switching transporting a paper sheet to an image former from a first tray to transporting a paper sheet to the image former from a second tray that takes a longer time to transport the paper sheet than the first tray.

According to a twelfth aspect of the disclosure, there is provided an information processing program causing a computer to execute a process for processing information, the process including: performing control in a first mode that causes an image former to start a process without waiting for an image processing operation to be completed if other trays that take a longer time duration to transport the paper sheet than a time duration that is taken by a first tray from which a paper sheet is transportable by a shortest time duration are present among trays that contain paper sheets having a sheet size on which an image is to be formed; and if the other trays are not present, performing control in a second mode that causes the image former to start the process after waiting until the image processing operation is completed.

According to a thirteenth aspect of the disclosure, there is provided an information processing method causing a computer to execute a process for processing information, the process including, if an image processing operation generating an image to be formed on a paper sheet is not completed until a predetermined period of time elapses, switching transporting a paper sheet to an image former from a first tray to transporting a paper sheet to the image former from a second tray that takes a longer time to transport the paper sheet than the first tray.

According to one of the first, eleventh, and thirteenth aspects, image formation failure may be controlled even if the information processing operation generating an image onto the paper sheets is not competed within a predetermined time.

According to the second aspect, a fast copy time may be improved in comparison with the case in which the paper sheet is transported from the second tray if the information processing operation is completed before the elapse of the predetermined time.

According to the third aspect, the image formation failure may be controlled even if the information processing operation is delayed.

According to the fourth aspect, the image formation failure may be controlled in comparison with the case in which the transport of the paper sheet from the second tray is not switched before the paper sheet is transported from the first tray.

According to the fifth aspect, the image may be formed on a paper sheet even if a tray that contains a paper sheet identical in sheet size to a paper sheet contained in the first tray is not present.

According to the sixth aspect, the image formation failure may be controlled even if the information processing operation is delayed when a tray that contains a paper sheet identical in sheet size to a paper sheet contained in the first tray is not present.

According to the seventh aspect, the time to transport the paper sheet from the second tray may be is prolonged in comparison with the case in which the distance of the transport path of the paper sheet from the second tray is shorter than the distance of the transport path of the paper sheet from the first tray.

According to one of the eighth and twelfth aspects, regardless of whether another tray that takes a longer time to transport the paper sheet than the first tray is present or not present, the image formation failure may be controlled even if the information processing operation generating an image to be formed on the paper sheet is not completed within the predetermined time.

According to the ninth aspect, in comparison with the case in which control is performed in the first mode if other trays that take a longer time duration to transport the paper sheet than a time duration that is taken by the first tray from which the paper sheet is transportable by the shortest time duration are present among trays that contain paper sheets having the sheet size on which the image is to be formed, control is imply performed in the first mode when the paper sheet is transported from a tray that may transport paper sheet to the image former at the timing that allows the image forming operation.

According to the tenth aspect, the time to transport the paper sheet from the second tray may be prolonged in comparison with the case in which the distance of the transport path of the paper sheet from the second tray is shorter than the distance of the transport path of the paper sheet from the first tray.

### Brief Description of the Drawings

Exemplary embodiment of the present disclosure will be described in detail based on the following figures, wherein:
Fig. 1 illustrates an example of a configuration of an information processing apparatus of an exemplary embodiment;
Fig. 2 illustrates an example of a functional configuration of a controller;
Fig. 3 is a flowchart illustrating a process flow of an information processing program;
Fig. 4 is a flowchart illustrating a process flow of an information processing program in a printing process in non-waiting start control;
Fig. 5 illustrates operations of elements in the information processing apparatus in the printing process in the non-waiting start control when an information processing operation is not delayed;
Fig. 6 illustrates the operations of the elements in the information processing apparatus in the printing process in the non-waiting start control when the information processing operation is delayed;
Fig. 7 is a flowchart illustrating a process flow of the information processing program in the printing process in a waiting start control; and
Fig. 8 illustrates the operations of the elements in the information processing apparatus in the printing process in the waiting start control.

### Detailed Description

Exemplary embodiment of the disclosure is described below with reference to the drawings.

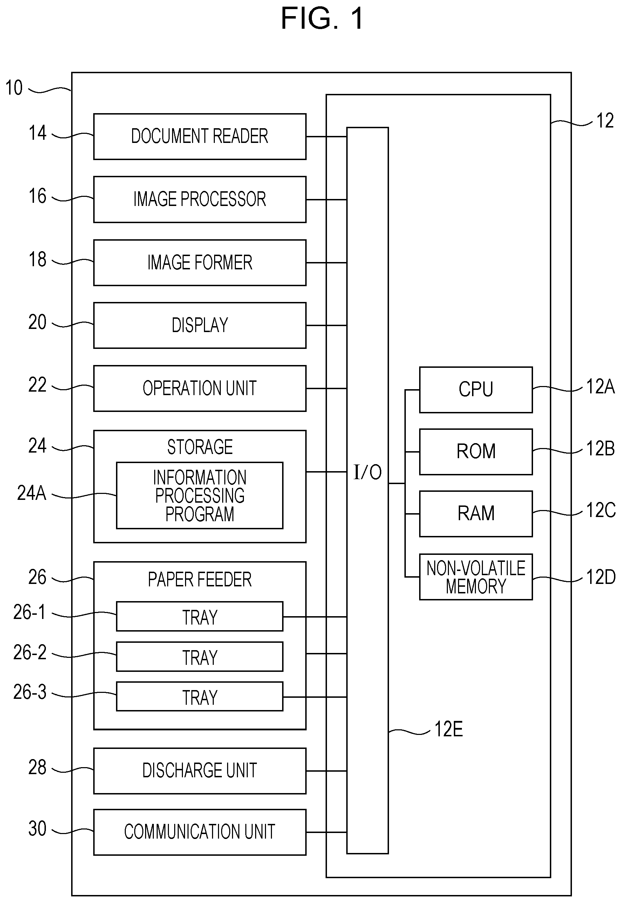

Referring to Fig. 1, the configuration of an information processing apparatus 10 of the exemplary embodiment is described below.

Fig. 1 illustrates an example of a configuration of the information processing apparatus 10 of the exemplary embodiment. The information processing apparatus 10 performs a printing process to generate a printed product by receiving a print job from a user. The printing process includes a document reading operation to read a document set by the user, an image processing operation that generates an image to be formed on a recording medium in response to the read document and an image forming operation that forms an image on a recording medium, in other words, includes a print operation that prints an image on a recording medium. The product is generated when the information processing apparatus 10 performs the printing process. An example of the recording medium is a paper sheet.

The information processing apparatus 10 in Fig. 1 includes a controller 12, document reader 14, image processor 16, image former 18, display 20, operation unit 22, storage 24, paper feeder 26, discharge unit 28, communication unit 30, and the like.

The controller 12 controls elements connected thereto. The controller 12 includes a central processing unit (CPU) 12A, read-only memory (ROM) 12B, random-access memory (RAM) 12C, non-volatile memory 12D, and input-output (IO) interface 12E.

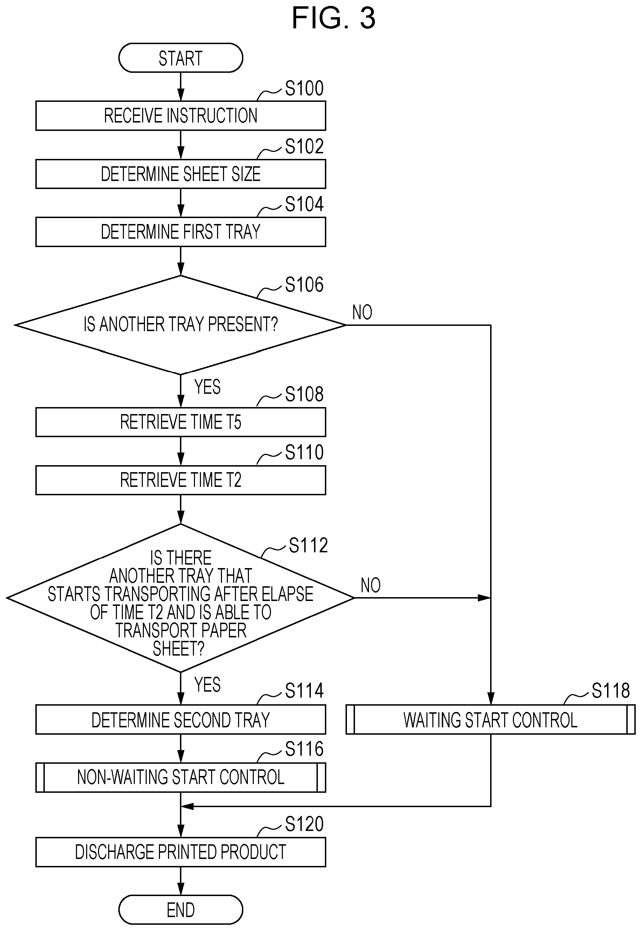

The CPU 12A reads an information processing program 24A and a variety of programs from at least one of the ROM 12B, non-volatile memory 12D or storage 24. The information processing program 24A is described below in greater detail (see Fig. 3). The CPU 12A controls the information processing apparatus 10 and the like by executing a read program using the RAM 12C as a work area. The CPU 12A is an example of a processor.

The CPU 12A, ROM 12B, RAM 12C and non-volatile memory 12D are communicably connected to the IO interface 12E via a bus.

The document reader 14 includes a charge-coupled device (CCD) image sensor that performs a document reading operation. The document reader 14 is implemented by, for example, an image scanner.

The image processor 16 performs an image processing operation on a document read by the document reader 14.

The image former 18 is an electrophotographic system or an ink-jet recording system and performs an image forming operation including a print operation that prints the generated image onto a paper sheet. The print operation is performed at a print point mounted on the image former 18.

The display 20 includes a touch panel and one of a liquid-crystal display and an organic electroluminescence (EL) display. The display 20 displays information responsive to user touch or a process of the information processing apparatus 10.

The operation unit 22 includes an operation key, operation button, power button and the like in the information processing apparatus 10. The user may specify a job on the information processing apparatus 10 or instruct the information processing apparatus 10 to start the job by performing a touch operation on the display 20 or pressing the operation button on the operation unit 22.

The storage 24 includes a solid-state drive (SSD) or a hard-disk drive (HDD). The storage 24 stores the information processing program 24A and a variety of other programs.

The paper feeder 26 includes trays containing paper sheets. The paper feeder 26 in Fig. 1 includes a tray 26-1, tray 26-2 and tray 26-3. The trays may contain paper sheets of the same sheet size or of different sizes. From among the trays, at least two trays may contain paper sheets of the same sheet size.

Concerning the layout of the tray 26-1, tray 26-2 and tray 26-3 in the paper feeder 26 in Fig. 1, the tray 26-1 is, for example, mounted such that among the tray 26-1, tray 26-2 and tray 26-3, the tray 26-1 has the shortest distance of a transport path indicating a path along which the paper sheet is transported to the print point of the image former 18. The tray 26-2 has a longer distance of the transport path than the tray 26-1 but shorter distance of the transport path than the tray 26-3. The tray 26-3 has the longest distance of the transport path.

The discharge unit 28 accumulates the printed product generated through the printing process.

The communication unit 30 is an interface that communicably connects a server external to the information processing apparatus 10 and the information processing apparatus 10. The communication unit 30 complies with communication standards, such as Wi-Fi (registered trademark), Bluetooth (registered trademark), and local-area network (LAN).

According to the exemplary embodiment, the CPU 12A performs control to perform in a series of sequence the printing process including the document reading operation by the document reader 14, the image processing operation by the image processor 16 and an image forming operation including a print operation performed by the image former 18. Since the operations included in the printing process are performed within respective predetermined defined time durations, the CPU 12A may perform assumed control in which the operations are performed without waiting for the end of a corresponding operation.

The predetermined defined time duration of each operation in the exemplary embodiment is described below.

The document reader 14 performs the document reading operation for time T1 indicating the predetermined defined time. The image processor 16 performs the image processing operation for time T1.

The image processing operation takes longer time than the predetermined defined time T1 depending on the CPU 12A and the state of each element in the information processing apparatus 10. In other words, the image processing operation may be delayed. If the image processing operation is delayed, the image processing operation is further performed within time T2 as the predetermined defined time. The time T2 is a maximum time duration that is permitted for the image processing operation if the image processing operation is delayed. Specifically, even if a delay occurs, the image processing operation is finished before the time T2 elapses.

The image former 18 starts up within time T3 indicating a predetermined defined time. The image former 18 may perform the printing process within time T4 as a predetermined defined time. The time T3 is a time duration until the time T4 that enables the print operation to be performed starts and the image former 18 performs an operation, which is to be performed before the print operation, within the time T3 until the start of the time T4.

The time T1 is determined depending on the size of a document to be read. The times T2 and T3 are determined depending on a per device basis, such as the image processor 16 or the image former 18. Information indicating values of times T1, T2, T3 and T4 may be stored, for example, on the storage 24.

In the assumed control in the exemplary embodiment, the time for each operation is predetermined as described above. In accordance with the predetermined time or the predetermined defined time of each operation in the printing process, the CPU 12A controls the operation of each element in a series of sequence without interrupting each operation or without stopping any operation when one operation transitions to another. An example of the predetermined time is time T5 as described below. Examples of the predetermined defined time are times T1, T2, T3 and T4.

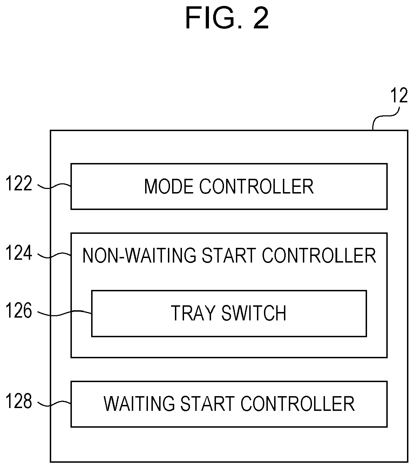

Fig. 2 illustrates an example of a functional configuration of the controller 12.

If trays containing paper sheets having a size on which an image is to be formed includes another tray that takes longer time to transport media than a first tray able to transport media within the shortest time, a mode controller 122 performs control to perform the printing process in non-waiting start control that allows the image former 18 to perform an operation without waiting for the end of the image processing operation of the image processor 16. The paper sheet of the size on which the image is formed may be determined depending on the size of the read document or the size specified by the user. The non-waiting start control is an example of a first mode.

If no such tray is included in the trays, the mode controller 122 performs control to perform the printing process in waiting start control that allows the image former 18 to start the process after waiting for the end of the image processing operation. The waiting start control is an example of a second mode.

The mode controller 122 is described in detail.

The trays 26-1 and 26-2 may now contain paper sheets of a size on which images are to be formed as illustrated in Fig. 1. The tray 26-3 may contain paper sheets of a size different from the size of the paper sheets contained in the trays 26-1 and 26-2. In such a case, from among the trays 26-1 and 26-2, a tray having the shortest time from the start of the transport of the paper sheet to the arrival of the paper sheet to the print point of the image former 18, for example, the tray 26-1 is the first tray. The tray 26-2 is another tray. The time until the arrival of the paper sheet at the print point depends on the distance of the transport path of the paper sheet from the tray to the print point. Referring to Fig. 1, since the transport path from the tray 26-1 is shorter in distance than the transport path from the tray 26-2, the tray 26-1 has the shortest time of the paper sheet to arrive at the print point.

Since there is another in the case described above, the printing process is performed in the non-waiting start control.

The trays 26-1, 26-2 and 26-3 may now contain paper sheets of mutually different sizes and the tray 26-1 may contain paper sheets of a size on which an image is to be formed as illustrated in Fig. 1. In such a case, since the tray 26-1 is the first tray with no other trays, the printing process is performed in the waiting start control.

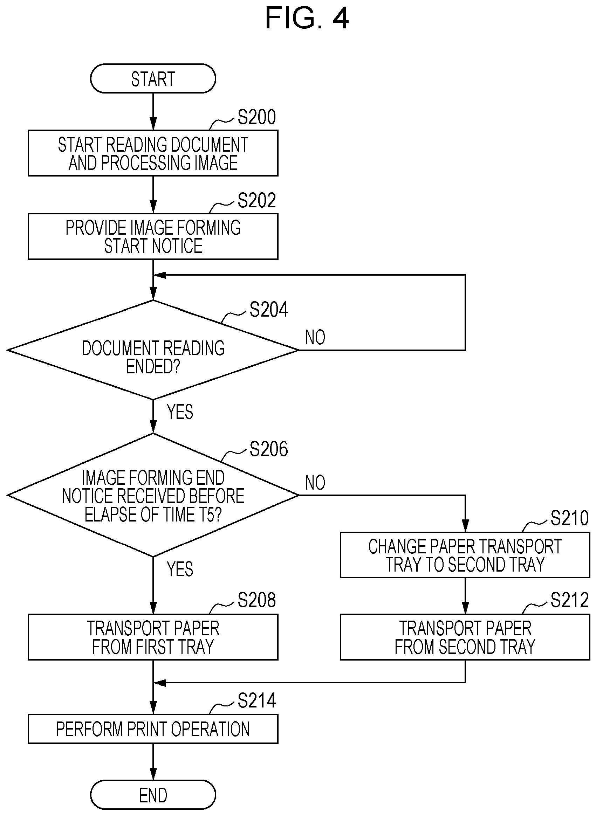

The non-waiting start controller 124 in Fig. 2 performs the non-waiting start control on the elements in the printing process. The printing process in the non-waiting start control is described in greater detail below (see Figs. 4 through 6).

The tray switch 126 functions in the non-waiting start control performed by the non-waiting start controller 124. If the image processing operation is not completed before the time T5 as the predetermined defined time elapses, the tray switch 126 switches the transport of the paper sheet to the image former 18 from the first tray to the transport of the paper sheet to the image former 18 from the second tray that takes longer time for the paper sheet transport than the first tray.

If there are other trays, the second tray is determined from among the other trays.

The time T5 is a predetermined time duration before the timing when time T6 used to transport the paper sheet from the first tray to the print point of the image former 18 starts. The time T5 is fixed on each information processing apparatus 10, extending from the timing of the end of the time T1 to a timing prior to the start of the time T6. Information indicating the value of the time T5 is stored on, for example, the storage 24.

As described above, the time to transport the paper sheet from a tray to the print point is determined by the distance of the transport path of the paper sheet to the print point. If the paper feeder 26 includes multiple trays, the first tray has the shortest distance of the transport path to the print point and the second tray has a longer distance of the transport path to the print point than the first tray.

A waiting start controller 128 in Fig. 2 perform the waiting start control on the elements in the printing process.

The operation of the information processing apparatus 10 in the printing process is described with reference to Figs. 3 through 8.

Fig. 3 is a flowchart illustrating a process flow of the information processing program 24A. The information processing program 24A is executed by the CPU 12A. The information processing program 24A is executed, for example, when the user specifies a print job.

In step S100, the CPU 12A receives from the user an instruction to start the print job.

In step S102, the CPU 12A determines the size of a paper sheet to be used in the printing process by acquiring the size of the document from the document that is set on the information processing apparatus 10 by the user. The size of the paper sheet may be specified by the user.

In step S104, the CPU 12A determines the first tray as a tray transporting the paper sheet from among trays containing the paper sheet of the size determined in step S102, in other words, from among trays containing the paper sheet of the size on which an image is formed. Specifically, if each of the trays 26-1, 26-2 and 26-3 in Fig. 1 contains the paper sheet of the size on which the image is formed, the tray 26-1 is determined to be the first tray.

In step S106, the CPU 12A determines whether an tray containing the paper sheet of the same size as the paper sheet contained in the first tray is present in addition to the first tray among the trays in the information processing apparatus 10. In other words, the CPU 12A determines whether another tray is present. If another tray is present, the CPU 12A performs an operation in step S108. If no another tray is present, the CPU 12A performs an operation in step S118.

In step S108, the CPU 12A retrieves the time T5 from, for example, the storage 24.

In step S110, the CPU 12A retrieves the time T2 from, for example, the storage 24.

In step S112, the CPU 12A determines whether the other trays include a tray that starts transporting the paper sheet after the elapse of the time T2 and is able to transport the paper sheet to the print point of the image former 18 before the end of the time T4.

If the tray that is determined as being present in step S112 is present in the other trays, the CPU 12A performs an operation in step S114. If the tray that is determined as being present in step S112 is not present in the other trays, the CPU 12A performs an operation in step S118.

If none of the other trays is able to transport the paper sheet within the time T4, no path is followed in the determination in step S112.

In step S114, the CPU 12A determines that the tray determined as being present in step S112 is the second tray. If multiple trays are determined as being present in step S112, the CPU 12A determines that one of the tray is the second tray. For example, each of the trays 26-1, 26-2 and 26-3 in Fig. 1 may contain the paper sheets of the size on which the image is formed and the tray 26-1 may be determined as being the first tray. In this case, if the tray 26-2 satisfies yes path in step S112, the tray 26-2 is determined as being the second tray.

In step S116, the CPU 12A performs the printing process in the non-waiting start control. The printing process in the non-waiting start control is described in greater detail below (see Figs. 4 through 6).

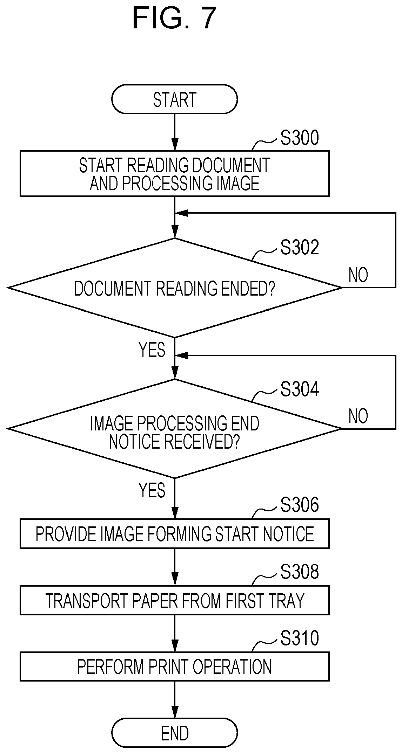

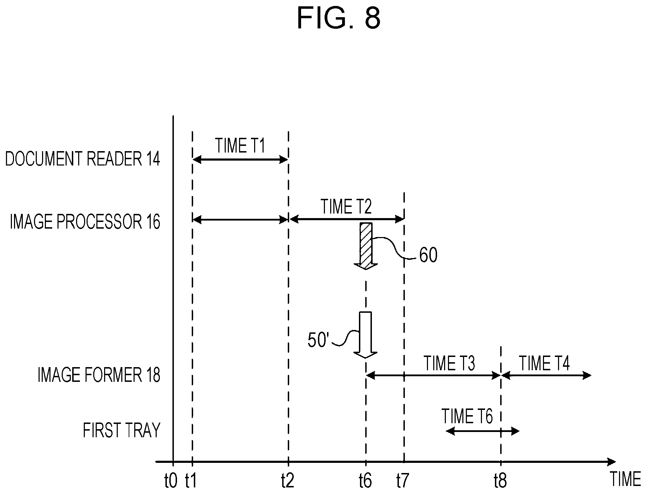

In step S118, the CPU 12A performs the printing process in the waiting start control. The printing process in the waiting start control is described in greater detail below (see Figs. 7 and 8).

In step S120, the CPU 12A discharges the printed product generated in the printing process in the non-waiting start control or the waiting start control.

The printing process in the non-waiting start control is described in detail below with reference to Figs. 4 through 6.

Fig. 4 is a flowchart illustrating a process flow of the information processing program 24A in the printing process in the non-waiting start control performed in step S116 in Fig. 3.

In step S200, the CPU 12A starts the document reading operation with the document reader 14 and the image processing operation with the image processor 16.

In step S202, the CPU 12A outputs an image forming start notice 50 to the image former 18. The image former 18 starts up in response to the image forming start notice 50. Both steps S200 and S202 may be concurrently performed.

In step S204, the CPU 12A determines whether the document reading operation is completed. If the reading of the set document is completed, the CPU 12A performs an operation in step S206. If the reading of the set document is not yet completed, the CPU 12A repeats the operation in step S204 until the reading of the document is completed.

In step S206, after the elapse of the time T1 but before the elapse of the time T5, the CPU 12A determines whether an image forming end notice 60 has been received.

If the image forming end notice 60 is received within the time T5 after the elapse of the time T1, the CPU 12A performs an operation in step S208. If the image forming end notice 60 is not received within the time T5 after the elapse of the time T1, the CPU 12A performs an operation in step S210.

In step S208, the CPU 12A transports a paper sheet from the first tray.

In step S210, the CPU 12A changes the tray from which the paper sheets are to be transported from the first tray to the second tray determined in step S114 in Fig. 3.

In step S212, the CPU 12A transports the paper sheets from the second tray.

In step S214, the CPU 12A performs the image forming operation, more in detail, the print operation, on the paper sheet at the print point. When the operation in step S214 is completed, the CPU 12A performs the operation in step S120.

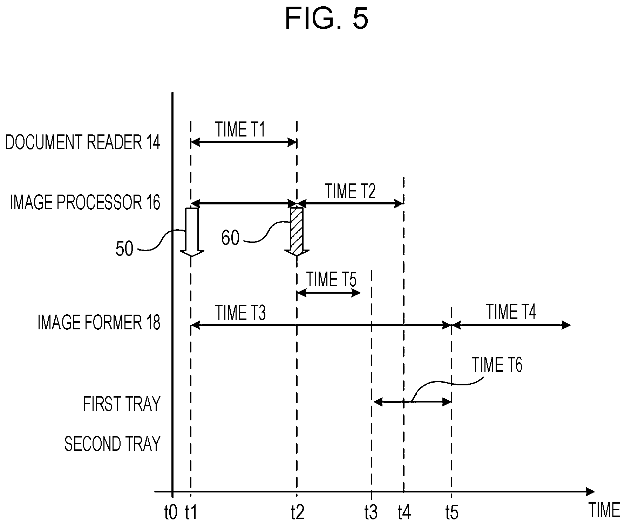

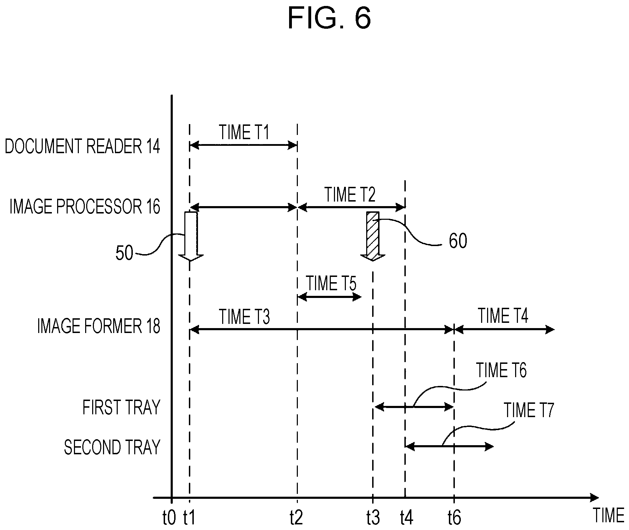

The printing process in the non-waiting start control is described in detail with reference to Figs. 5 and 6.

Fig. 5 illustrates the operation of each element in the information processing apparatus 10 when the image processing operation is not delayed in the printing process in the non-waiting start control.

The document reader 14 and image processor 16 start up at time t0 when the printing process in the non-waiting start control starts in step S116. In step S200, the document reader 14 and image processor 16 respectively starts the document reading operation and the image processing operation and in step S202, the image former 18 starts up in response to the image forming start notice 50. The image former 18 performs the image forming operation excluding the printing process until the start of the time T4.

As described above, the document reader 14 and image processor 16 respectively perform the document reading operation and image processing operation within the time T1.

Referring to Fig. 5, the image forming end notice 60 is provided at time t2 before the time T5 elapses after the elapse of the time T1. In this case, the image processing operation is not delayed and yes path is followed in the determination in step S206 in Fig. 4. The CPU 12A transports the paper sheet from the first tray to the print point of the image former 18 within the time T6.

Referring to Fig. 5, the image former 18 may perform the print operation on the incoming paper sheet at time t5 at the timing when the time T4 starts after the elapse of the time T3.

Fig. 6 illustrates the operation of each element in the information processing apparatus 10 when the image processing operation is delayed in the printing process in the non-waiting start control.

In a way similar to Fig. 5, the document reader 14 and image processor 16 startup when the printing process in the non-waiting start control starts in step S116. The document reader 14 and image processor 16 start up in step S200 and the image former 18 starts up in response to the image forming start notice 50 in step S202. The image former 18 performs the image forming operation excluding the printing process until the start of the time T4. As described above, the document reader 14 and image processor 16 respectively perform the document reading operation and image processing operation within the time T1.

Referring to Fig. 6, the image processing operation is delayed and the image forming end notice 60 is not provided before the time T5 elapses after the elapse of the time T1. The image forming end notice 60 illustrated in Fig. 6 is provided at time t3 at the timing when time T6 starts after the elapse of the time T5.

Referring to Fig. 6, no path is followed in the determination in step S206 in Fig. 4. The CPU 12A switches the paper transporting tray from the first tray to the second tray before time t3 after the elapse of the time T5 and transports the paper sheet from the second tray to the print point of the image former 18 within time T7.

Referring to Fig. 6, even if the image processing operation is delayed, the information processing apparatus 10 may transport the paper sheet to the print point before the elapse of the time T4 and the image former 18 may perform the print operation on the incoming paper sheet in a manner free from print failure.

The printing process in the waiting start control is described in detail with reference to Figs. 7 and 8.

Fig. 7 is a flowchart illustrating a process flow of the information processing program 24A in the printing process in the waiting start control performed in step S118 in Fig. 3.

Operations in steps S300 and S302 are respectively identical to the operations in steps S200 and S204 and the discussion thereof is not repeated.

In step S304, the CPU 12A determines whether the image forming end notice 60 has been received from the image processor 16. If the image forming end notice 60 has been received, the CPU 12A performs an operation in step S306. If the image forming end notice 60 has not been received yet, the CPU 12A iterates the operation in step S304 until the image forming end notice 60 has been received.

In step S306, the CPU 12A outputs an image forming start notice 50' to the image former 18. The image former 18 starts up in response to the image forming start notice 50'.

In step S308, the CPU 12A transports the paper sheet from the first tray.

In step S310, the CPU 12A performs the print operation on the incoming paper sheet.

When the operation in step S310 is completed, the CPU 12A performs the operation in step S120.

Fig. 8 illustrates the operation of each element in the information processing apparatus 10 in the printing process in the waiting start control.

The document reader 14 and image processor 16 start up when the print job starts. The document reader 14 and image processor 16 performs the operations thereof in step S300.

As described above, the document reader 14 and image processor 16 respectively perform the document reading operation and image processing operation within the time T1.

Referring to Fig. 8, the CPU 12A outputs the image forming start notice 50' after the image forming end notice 60 is output. In Fig. 8, the image processor 16 outputs the image forming end notice 60 at time t6 within the time T2. In step S306 in Fig. 7, the CPU 12A outputs the image forming start notice 50' to the image former 18 at t6 or later. The image forming start notice 50' includes an instruction specifying the first tray as a paper sheet transporting tray. In response to the reception of the image forming start notice 50', the image former 18 starts up.

After the image former 18 starts up, the CPU 12A transports the paper sheet from the first tray within time T6 and performs within the time T4 the print operation on the paper sheet having arrived at the print point.

Referring to Fig. 8, regardless of whether the image processing operation is delayed or not, the image former 18 starts up after the image forming end notice 60 is output and the information processing apparatus 10 may perform the print operation on the incoming paper sheet in a manner free from print failure.

In the embodiment above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

According to the exemplary embodiment, the information processing program 24A is installed onto the storage 24. The disclosure is not limited to this method. The information processing program 24A of the exemplary embodiment may be delivered in a recorded form on a computer readable recording medium. For example, the information processing program 24A of the exemplary embodiment may be delivered in a recorded form on a compact disc ROM (CD-ROM), a digital versatile disc ROM (DVD-ROM), an optical disc or a semiconductor memory, such as a universal serial bus (USB) or a memory card. The information processing program 24A of the exemplary embodiment may be acquired from an external apparatus via the communication unit 30.

According to the exemplary embodiment, the process of the information processing apparatus 10 is implemented by a software configuration when a computer executes the program. The disclosure is not limited to this method. For example, information processing may be implemented by a hardware configuration or a combination the software configuration and the hardware configuration.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims.

According to the present disclosure, image formation failure may be controlled even if the information processing operation generating an image onto the paper sheets is not competed within a predetermined time.

According to the present disclosure, a fast copy time may be improved in comparison with the case in which the paper sheet is transported from the second tray if the information processing operation is completed before the elapse of the predetermined time.

According to the present disclosure, the image formation failure may be controlled even if the information processing operation is delayed.

According to the present disclosure, the image formation failure may be controlled in comparison with the case in which the transport of the paper sheet from the second tray is not switched before the paper sheet is transported from the first tray.

According to the present disclosure, the image may be formed on a paper sheet even if a tray that contains a paper sheet identical in sheet size to a paper sheet contained in the first tray is not present.

According to the present disclosure, the image formation failure may be controlled even if the information processing operation is delayed when a tray that contains a paper sheet identical in sheet size to a paper sheet contained in the first tray is not present.

According to the present disclosure, the time to transport the paper sheet from the second tray is may be prolonged in comparison with the case in which the distance of the transport path of the paper sheet from the second tray is shorter than the distance of the transport path of the paper sheet from the first tray.

According to the present disclosure, regardless of whether another tray that takes a longer time to transport the paper sheet than the first tray is present or not present, the image formation failure may be controlled even if the information processing operation generating an image to be formed on the paper sheet is not completed within the predetermined time.

According to the present disclosure, in comparison with the case in which control is performed in the first mode only if other trays that take a longer time duration to transport the paper sheet than a time duration that is taken by the first tray from which the paper sheet is transportable by the shortest time duration are present among trays that contain paper sheets having the sheet size on which the image is to be formed, control is imply performed in the first mode when the paper sheet is transported from a tray that may transport paper sheet to the image former at the timing that allows the image forming operation.

According to the present disclosure, the time to transport the paper sheet from the second tray may be may be prolonged in comparison with the case in which the distance of the transport path of the paper sheet from the second tray is shorter than the distance of the transport path of the paper sheet from the first tray.

## Claims

1. An information processing apparatus (10), comprising:
a processor (12A), the information processing apparatus (10) being **characterized in that** the processor is configured to:
if an image processing operation generating an image to be formed on a paper sheet is not completed until a predetermined period of time elapses, switch transporting a paper sheet to an image former from a first tray (26-1) to transporting a paper sheet to the image former (18) from a second tray (26-2) that takes a longer time to transport the paper sheet than the first tray.

2. The information processing apparatus (10) according to claim 1, wherein the processor (12A) is configured to transport the paper sheet from the first tray if the image processing operation is completed before the predetermined period of time elapses.

3. The information processing apparatus (10) according to one of claims 1 and 2, wherein the predetermined period of time is a time duration extending from a timing when the image processing operation is completed without being delayed with respect to a specific period of time to a timing before the paper sheet is transported from the first tray.

4. The information processing apparatus (10) according to one of claims 1 through 3, wherein the processor (12A) is configured to switch to transporting the paper sheet from the second tray before transporting the paper sheet from the first tray starts after elapse of the predetermined period of time.

5. The information processing apparatus (10) according to one of claims 1 through 4, wherein the processor (12A) is configured to, if the second tray containing a paper sheet identical in sheet size to a paper sheet contained in the first tray is not present, transport the paper sheet from the first tray.

6. The information processing apparatus (10) according to claim 5, wherein the processor (12A) is configured to start a process of the image former after the image processing operation is completed.

7. The information processing apparatus (10) according to one of claims 1 through 6, wherein a transport path of the paper sheet from the second tray to the image former is longer than a transport path of the paper sheet from the first tray to the image former.

8. An information processing apparatus (10), comprising:
a processor (12A) the information processing apparatus (10) being **characterized in that** the processor is configured to:
perform control in a first mode that causes an image former (18) to start a process without waiting for an image processing operation generating an image to be formed on a paper sheet to be completed if other trays that take a longer time duration to transport a paper sheet than a time duration that is taken by a first tray from which a paper sheet is transportable by a shortest time duration are present among trays that contain paper sheets having a sheet size on which an image is to be formed; and
if the other trays are not present, perform control in a second mode that causes the image former to start the process after waiting until the image processing operation is completed.

9. The information processing apparatus (10) according to claim 8, wherein the processor is configured to perform control in the second mode if the other trays include a second tray that, if the image processing operation is delayed, starts transporting the paper sheet after an elapse of a maximum time duration used to perform the image processing operation and is able to transport the paper sheet to the image former at a timing that is in time for an image forming operation.

10. The information processing apparatus (10) according to claim 9, wherein a transport path from the first tray to the image former is shortest, and
wherein a transport path from the second tray to the image former is longer than the transport path from the first tray.

11. An information processing program comprising instructions which, when the program is executed by a computer, cause the computer to execute a process for processing information, **characterized in that** the process comprises:
if an image processing operation generating an image to be formed on a paper sheet is not completed until a predetermined period of time elapses, switching transporting a paper sheet to an image former from a first tray (26-1) to transporting a paper sheet to the image former from a second tray (26-2) that takes a longer time to transport the paper sheet than the first tray.

12. An information processing program comprising instructions which, when the program is executed by a computer, cause the computer to execute a process for processing information, **characterized in that** the process comprises:
performing control in a first mode that causes an image former (18)to start a process without waiting for an image processing operation to be completed if other trays that take a longer time duration to transport the paper sheet than a time duration that is taken by a first tray from which a paper sheet is transportable by a shortest time duration are present among trays that contain paper sheets having a sheet size on which an image is to be formed; and
if the other trays are not present, performing control in a second mode that causes the image former to start the process after waiting until the image processing operation is completed.

13. An information processing method causing a computer to execute a process for processing information, **characterized in that** the process comprises:
if an image processing operation generating an image to be formed on a paper sheet is not completed until a predetermined period of time elapses, switching transporting a paper sheet to an image former from a first tray to transporting a paper sheet to the image former from a second tray that takes a longer time to transport the paper sheet than the first tray.

## Patentansprüche

1. Informationsverarbeitungsvorrichtung (10), umfassend:
einen Prozessor (12A), wobei die Informationsverarbeitungsvorrichtung (10) **dadurch gekennzeichnet ist, dass** der Prozessor so konfiguriert ist, dass er:
wenn ein Bildverarbeitungsvorgang, der ein Bild erzeugt, das auf einem Papierblatt zu bilden ist, nicht abgeschlossen ist, bis eine vorbestimmte Zeitspanne verstreicht, Transportieren eines Papierblatts zu einem Bilderzeuger von einem ersten Fach (26-1) auf Transportieren eines Papierblatts zu dem Bilderzeuger (18) von einem zweiten Fach (26-2), das eine längere Zeit zum Transportieren des Papierblatts als das erste Fach benötigt, umschaltet.

2. Informationsverarbeitungsvorrichtung (10) nach Anspruch 1, wobei der Prozessor (12A) so konfiguriert ist, dass er das Papierblatt von dem ersten Fach transportiert, wenn der Bildverarbeitungsvorgang abgeschlossen ist, bevor die vorbestimmte Zeitspanne verstreicht.

3. Informationsverarbeitungsvorrichtung (10) nach einem der Ansprüche 1 und 2, wobei die vorbestimmte Zeitspanne eine Zeitdauer ist, die sich von einem Zeitpunkt, zu dem der Bildverarbeitungsvorgang abgeschlossen ist, ohne in Bezug auf eine spezifische Zeitspanne verzögert zu sein, bis zu einem Zeitpunkt, bevor das Papierblatt von dem ersten Fach transportiert wird, erstreckt.

4. Informationsverarbeitungsvorrichtung (10) nach einem der Ansprüche 1 bis 3, wobei der Prozessor (12A) so konfiguriert ist, dass er auf Transportieren des Papierblatts von dem zweiten Fach umschaltet, bevor Transportieren des Papierblatts von dem ersten Fach nach Verstreichen der vorbestimmten Zeitspanne startet.

5. Informationsverarbeitungsvorrichtung (10) nach einem der Ansprüche 1 bis 4, wobei der Prozessor (12A) so konfiguriert ist, dass er, wenn das zweite Fach, das ein Papierblatt enthält, das in Blattgröße mit einem Papierblatt, das in dem ersten Fach enthalten ist, identisch ist, nicht vorhanden ist, das Papierblatt von dem ersten Fach transportiert.

6. Informationsverarbeitungsvorrichtung (10) nach Anspruch 5, wobei der Prozessor (12A) so konfiguriert ist, dass er einen Prozess des Bilderzeugers startet, nachdem der Bildverarbeitungsvorgang abgeschlossen ist.

7. Informationsverarbeitungsvorrichtung (10) nach einem der Ansprüche 1 bis 6, wobei ein Transportweg des Papierblatts von dem zweiten Fach zu dem Bilderzeuger länger als ein Transportweg des Papierblatts von dem ersten Fach zu dem Bilderzeuger ist.

8. Informationsverarbeitungsvorrichtung (10), umfassend:
einen Prozessor (12A), wobei die Informationsverarbeitungsvorrichtung (10) **dadurch gekennzeichnet ist, dass** der Prozessor so konfiguriert ist, dass er:
Steuerung in einem ersten Modus, der einen Bilderzeuger (18) veranlasst, einen Prozess zu starten, ohne darauf zu warten, dass ein Bildverarbeitungsvorgang, der ein Bild erzeugt, das auf einem Papierblatt zu bilden ist, abgeschlossen wird, durchführt, wenn andere Fächer, die eine längere Zeitdauer zum Transportieren eines Papierblatts benötigen als eine Zeitdauer, die von einem ersten Fach, aus dem ein Papierblatt mit einer kürzesten Zeitdauer transportierbar ist, benötigt wird, unter Fächern, die Papierblätter mit einer Blattgröße, auf der ein Bild zu bilden ist, enthalten, vorhanden sind; und
wenn die anderen Fächer nicht vorhanden sind, Steuerung in einem zweiten Modus, der den Bilderzeuger veranlasst, den Prozess zu starten, nachdem er gewartet hat, bis der Bildverarbeitungsvorgang abgeschlossen ist, durchführt.

9. Informationsverarbeitungsvorrichtung (10) nach Anspruch 8, wobei der Prozessor so konfiguriert ist, dass er Steuerung in dem zweiten Modus durchführt, wenn die anderen Fächer ein zweites Fach enthalten, das, wenn der Bildverarbeitungsvorgang verzögert wird, Transportieren des Papierblatts nach einer Verstreichung einer maximalen Zeitdauer, die zum Durchführen des Bildverarbeitungsvorgangs verwendet wird, startet und in der Lage ist, das Papierblatt zu einem Zeitpunkt, der für einen Bildbildungsprozess rechtzeitig ist, zu dem Bilderzeuger zu transportieren.

10. Informationsverarbeitungsvorrichtung (10) nach Anspruch 9, wobei ein Transportweg von dem ersten Fach zu dem Bilderzeuger am kürzesten ist, und
wobei ein Transportweg von dem zweiten Fach zu dem Bilderzeuger länger als der Transportweg von dem ersten Fach ist.

11. Informationsverarbeitungsprogramm, das Anweisungen umfasst, die, wenn das Programm von einem Computer ausgeführt wird, den Computer veranlassen, einen Prozess zum Verarbeiten von Informationen auszuführen, **dadurch gekennzeichnet, dass** der Prozess umfasst:
wenn ein Bildverarbeitungsvorgang, der ein Bild erzeugt, das auf einem Papierblatt zu bilden ist, nicht abgeschlossen ist, bis eine vorbestimmte Zeitspanne verstreicht, Umschalten von Transportieren eines Papierblatts zu einem Bilderzeuger von einem ersten Fach (26-1) auf Transportieren eines Papierblatts zu dem Bilderzeuger von einem zweiten Fach (26-2), das eine längere Zeit zum Transportieren des Papierblatts als das erste Fach benötigt.

12. Informationsverarbeitungsprogramm, das Anweisungen umfasst, die, wenn das Programm von einem Computer ausgeführt wird, den Computer veranlassen, einen Prozess zum Verarbeiten von Informationen auszuführen, **dadurch gekennzeichnet, dass** der Prozess umfasst:
Durchführen von Steuerung in einem ersten Modus, der einen Bilderzeuger (18) veranlasst, einen Prozess zu starten, ohne darauf zu warten, dass ein Bildverarbeitungsvorgang abgeschlossen wird, wenn andere Fächer, die eine längere Zeitdauer zum Transportieren des Papierblatts benötigen als eine Zeitdauer, die von einem ersten Fach, aus dem ein Papierblatt mit einer kürzesten Zeitdauer transportierbar ist, benötigt wird, unter Fächern, die Papierblätter mit einer Blattgröße, auf der ein Bild zu bilden ist, enthalten, vorhanden sind; und
wenn die anderen Fächer nicht vorhanden sind, Durchführen von Steuerung in einem zweiten Modus, der den Bilderzeuger veranlasst, den Prozess zu starten, nachdem er gewartet hat, bis der Bildverarbeitungsvorgang abgeschlossen ist.

13. Informationsverarbeitungsverfahren, das einen Computer veranlasst, einen Prozess zum Verarbeiten von Informationen auszuführen, **dadurch gekennzeichnet, dass** der Prozess umfasst:
wenn ein Bildverarbeitungsvorgang, der ein Bild erzeugt, das auf einem Papierblatt zu bilden ist, nicht abgeschlossen ist, bis eine vorbestimmte Zeitspanne verstreicht, Umschalten von Transportieren eines Papierblatts zu einem Bilderzeuger von einem ersten Fach auf Transportieren eines Papierblatts zu dem Bilderzeuger von einem zweiten Fach, das eine längere Zeit zum Transportieren des Papierblatts als das erste Fach benötigt.

## Revendications

1. Appareil de traitement d'informations (10), comprenant :
un processeur (12A), l'appareil de traitement d'informations (10) étant **caractérisé en ce que** le processeur est configuré pour :
si une opération de traitement d'images générant une image à former sur une feuille de papier n'est pas terminée avant qu'une période de temps prédéterminée ne s'écoule, commuter le transport d'une feuille de papier vers un formateur d'images depuis un premier bac (26-1) vers le transport d'une feuille de papier vers le formateur d'images (18) depuis un deuxième bac (26-2) qui nécessite un temps plus long pour le transport de la feuille de papier que le premier bac.

2. Appareil de traitement d'informations (10) selon la revendication **1,** dans lequel le processeur (12A) est configuré pour transporter la feuille de papier depuis le premier bac si l'opération de traitement d'images est terminée avant que la période de temps prédéterminée ne s'écoule.

3. Appareil de traitement d'informations (10) selon l'une des revendications 1 et 2, dans lequel la période de temps prédéterminée est une durée de temps s'étendant d'un moment où l'opération de traitement d'images est terminée sans être retardée par rapport à une période de temps spécifique jusqu'à un moment avant que la feuille de papier ne soit transportée depuis le premier bac.

4. Appareil de traitement d'informations (10) selon l'une des revendications 1 à 3, dans lequel le processeur (12A) est configuré pour commuter vers le transport de la feuille de papier depuis le deuxième bac avant que le transport de la feuille de papier depuis le premier bac ne commence après l'écoulement de la période de temps prédéterminée.

5. Appareil de traitement d'informations (10) selon l'une des revendications 1 à 4, dans lequel le processeur (12A) est configuré pour, si le deuxième bac contenant une feuille de papier de taille de feuille identique à une feuille de papier contenue dans le premier bac n'est pas présent, transporter la feuille de papier depuis le premier bac.

6. Appareil de traitement d'informations (10) selon la revendication 5, dans lequel le processeur (12A) est configuré pour démarrer un processus du formateur d'images après que l'opération de traitement d'images est terminée.

7. Appareil de traitement d'informations (10) selon l'une des revendications 1 à 6, dans lequel un chemin de transport de la feuille de papier depuis le deuxième bac vers le formateur d'images est plus long qu'un chemin de transport de la feuille de papier depuis le premier bac vers le formateur d'images.

8. Appareil de traitement d'informations (10), comprenant :
un processeur (12A), l'appareil de traitement d'informations (10) étant **caractérisé en ce que** le processeur est configuré pour :
effectuer un contrôle dans un premier mode qui amène un formateur d'images (18) à démarrer un processus sans attendre qu'une opération de traitement d'images générant une image à former sur une feuille de papier soit terminée, si d'autres bacs qui nécessitent une durée de temps plus longue pour le transport d'une feuille de papier qu'une durée de temps qui est requise par un premier bac à partir duquel une feuille de papier est transportable par une durée de temps la plus courte sont présents parmi des bacs qui contiennent des feuilles de papier ayant une taille de feuille sur laquelle une image doit être formée ; et
si les autres bacs ne sont pas présents, effectuer un contrôle dans un deuxième mode qui amène le formateur d'images à démarrer le processus après avoir attendu que l'opération de traitement d'images soit terminée.

9. Appareil de traitement d'informations (10) selon la revendication 8, dans lequel le processeur est configuré pour effectuer un contrôle dans le deuxième mode si les autres bacs incluent un deuxième bac qui, si l'opération de traitement d'images est retardée, commence à transporter la feuille de papier après un écoulement d'une durée de temps maximale utilisée pour effectuer l'opération de traitement d'images et est capable de transporter la feuille de papier vers le formateur d'images à un moment qui est à temps pour une opération de formation d'images.

10. Appareil de traitement d'informations (10) selon la revendication 9, dans lequel un chemin de transport depuis le premier bac vers le formateur d'images est le plus court, et
dans lequel un chemin de transport depuis le deuxième bac vers le formateur d'images est plus long que le chemin de transport depuis le premier bac.

11. Programme de traitement d'informations comprenant des instructions qui, lorsque le programme est exécuté par un ordinateur, amènent l'ordinateur à exécuter un processus de traitement d'informations, **caractérisé en ce que** le processus comprend :
si une opération de traitement d'images générant une image à former sur une feuille de papier n'est pas terminée avant qu'une période de temps prédéterminée ne s'écoule, commuter le transport d'une feuille de papier vers un formateur d'images depuis un premier bac (26-1) vers le transport d'une feuille de papier vers le formateur d'images depuis un deuxième bac (26-2) qui nécessite un temps plus long pour le transport de la feuille de papier que le premier bac.

12. Programme de traitement d'informations comprenant des instructions qui, lorsque le programme est exécuté par un ordinateur, amènent l'ordinateur à exécuter un processus de traitement d'informations, **caractérisé en ce que** le processus comprend :
effectuer un contrôle dans un premier mode qui amène un formateur d'images (18) à démarrer un processus sans attendre qu'une opération de traitement d'images soit terminée si d'autres bacs qui nécessitent une durée de temps plus longue pour le transport de la feuille de papier qu'une durée de temps qui est requise par un premier bac à partir duquel une feuille de papier est transportable par une durée de temps la plus courte sont présents parmi des bacs qui contiennent des feuilles de papier ayant une taille de feuille sur laquelle une image doit être formée ; et
si les autres bacs ne sont pas présents, effectuer un contrôle dans un deuxième mode qui amène le formateur d'images à démarrer le processus après avoir attendu que l'opération de traitement d'images soit terminée.

13. Procédé de traitement d'informations amenant un ordinateur à exécuter un processus de traitement d'informations, **caractérisé en ce que** le processus comprend :
si une opération de traitement d'images générant une image à former sur une feuille de papier n'est pas terminée avant qu'une période de temps prédéterminée ne s'écoule, commuter le transport d'une feuille de papier vers un formateur d'images depuis un premier bac vers le transport d'une feuille de papier vers le formateur d'images depuis un deuxième bac qui nécessite un temps plus long pour le transport de la feuille de papier que le premier bac.
